# EUROPEAN PATENT APPLICATION

(11) **EP 3 252 799 A1**
(43) Date of publication of application: **06.12.2017**
(21) Application number: 16172520.5
(22) Date of filing: 01.06.2016
(51) Int. Cl.: H01K 1/14, H01K 1/04, H01K 1/34, H01K 1/46, H01K 9/00, H05B 3/00, H05B 3/40

(54) **INFRARED EMITTER**

(71) Applicant: Speziallampenfabrik Dr. Fischer GmbH, 65582 Diez (DE)
(72) Inventor: Nennig, Pascal, 57160 Scy-Chazelles (FR); Gueusquin, Eric, 57580 Vatimont (FR)
(74) Representative: Müller, Eckhard

(57) **Abstract**

An infrared emitter with at least two resistance wires forming a helix is described. The at least two helices are disposed in juxtaposition with each other at the side of their longitudinal axis. The ratio between the inner diameter of the helix formed by each resistance wire and the diameter of that resistance wire is smaller than 8.

## Description

### Field of the invention

The present invention relates to an infrared emitter with at least two resistance wires forming a helix, wherein the at least two helices are disposed in juxtaposition with each other at the side of their longitudinal axis.

Infrared radiation can be used to heat various kinds of objects. It can be applied in medical or industrial processes, for example. In some industrial processes high power heating on a small surface by radiation in the medium infrared spectrum can be required. A typical application is the removal of water by heating needed in the printing industry.

A most simple way to generate medium infrared radiation is to use resistance heating in which an electric current flows through a wire so that the wire is heated as a result of its resistance. The heated wire then emits radiation which is primarily in the infrared spectrum.

In some cases it is desirable to generate infrared radiation with high radiation density in order to heat an object with high effectiveness. For this purpose several infrared emitters can be combined in one array which is optimized in order to reach high radiation density. Furthermore, a filament, typically a winded resistance wire, which is used as an infrared emitter can be optimized with respect to its geometry in order to reach this purpose of high radiation density.

Medium infrared radiation with high radiation density can be required in systems where this infrared radiation needs to be applied with high intensity to objects at short distances, in particular objects less than 1 meter away from the radiation source. But depending on the application the irradiation can still be effective several meters away from the source. Generally, medium infrared radiation is stronger absorbed by ambient air compared to near infrared, for example, so that this loss of energy along the path between the source and the targeted surface always has to be taken into account.

### Background of the invention

DE 39 38 437 A1 describes an infrared emitter with two infrared emitting filaments in partial, tubular chambers that are disposed parallel to each other. The emitter allows to heat the whole length or only a partial length of each filament. Thus, a certain flexibility is achieved with respect to the area that should be he heated by the emitted radiation.

DE 100 24 709 B4 describes a heating lamp with at least two filaments, both having at least one winded and one non-winded section along their longitudinal axis. The filaments can be controlled in such a way that a desired temperature profile is generated on the object that is heated by the infrared emitting filaments.

State of the art infrared emitters, such as the ones described above, lack the ability to generate infrared radiation, especially in the medium infrared spectrum, with maximized radiation density. Furthermore, the shape is usually not very compact and/or variable with regard to the location where the emitter is disposed, i. e. the space that is needed for the emitter.

### Summary of the invention

The problem of the invention is to provide an infrared emitter that generates medium infrared radiation of high density while having a high structural stability with respect to the filaments that are used to generate the radiation, especially in their axial direction.

The problem is solved by the infrared emitter according to claim 1. Advantageous embodiments of the invention result from the dependent claims as well the following description and the figures.

The infrared emitter according to the invention has at least two resistance wires forming a helix, wherein the at least two helices are disposed in juxtaposition with each other at the side of their longitudinal axis. The ratio between the inner diameter of the helix formed by each resistance wire and the diameter of that resistance wire is smaller than 8.

The advantage of such an arrangement of several resistance wires, combined with the special geometric properties of the helix formed by the wire, is that a high infrared radiation density can be reached while its rigid construction particularly leads to an axial stability that prevents that the turns of the helically formed wire get in contact with each other, for example in the case of shocks/vibrations or gradually, for example by degradation of the wire. The structure basically doesn't sag and/or tilt over its life time so that the emission characteristics of the infrared emitter are not deteriorated by such mechanical influences.

The combination of two or more resistance wires used as infrared emitters allows to increase the infrared radiation density while allowing a highly compact design that can also be flexibly adapted to the space needed for the emitter. The rigid structure of the helical wires allows to have a very high turn density of the helix without the danger of physical contact between the turns like in the cases mentioned above. A high turn density on the other hand allows a high radiation density.

The benefit of a highly compact design of the emitter, especially in the linear form allowed by the arrangement of the helices, can arise when the emitter is used in optical systems, for example together with reflectors of various geometrical shapes (parabolic, elliptic etc.), and it is necessary to guide the radiation with high precision.

Furthermore, the high axial stability of the helical structure ensures that the radiation is distributed more homogenously since a shift of the turns of the helical wire with respect to each other is prevented. In addition, the rigid and therefore stable structure of the helically formed wire also allows to place the emitter vertically without a collapse of the helix structure caused by the wire's own weight.

In a first embodiment the resistance wires are formed of a metal or a metal alloy. Since it is necessary to heat the resistance wire to rather high temperatures, the high melting point of most metals or metal alloys ensures that the wire is not destroyed when heated to high temperatures. Furthermore, the flexibility concerning the composition of a metal alloy allows to adapt the wire to certain thermal and mechanical properties that are desired.

In another embodiment each helix is provided within a tube, preferably a glass tube. The main advantage is that the helices are separated from each other so a contact between them is prevented. Furthermore, their geometrical straightness is reinforced, mainly by preventing a twisting of the helices under certain circumstances.

In a further embodiment a plurality of tubes, each with a helix, is provided inside an outer tube. Such an outer tube can hold together the plurality of tubes with the helices and protect them from external influences like mechanical shocks. Besides, it can be used as a filter that absorbs certain parts of the emission spectrum that are not desired.

In another embodiment a plurality of tubes is surrounded by an outer tube, wherein at least two tubes are provided with a helix inside and at least one tube is provided without a helix inside. Such a design allows to use a tube without a helix inside for other purposes. It can serve to separate the tubes from each other or be used as a room for electrical leads contacting the resistance wires.

In a further embodiment the tubes and the outer tube are basically transparent for medium infrared radiation. This ensures that the medium infrared radiation generated by the heated wires can leave the infrared emitter basically without being absorbed. Therefore, the intensity of the emitted medium infrared radiation is maximized and the radiation heating of the various tubes only moderate.

In another embodiment the length of one turn of the helix is between 1.01 and 1.9 times the diameter of the resistance wire. This corresponds to a very high turn density of the helix that leads to an optimized radiation density since the surface from which the radiation is emitted is maximized in relation to the length of the helix.

In a further embodiment the ratio between the inner diameter of the helix formed by each resistance wire and the diameter of that resistance wire is between 1 and 8. In this range the structure of the helix can be kept rigid and stable while allowing a high turn density of the helix that leads to high radiation density.

In another embodiment the resistance wires are heated to a temperature between 600 °C and 1200 °C. In this temperature range a considerable amount of medium infrared radiation is produced while the radiation of shorter wavelengths is minimized. It is therefore not necessary to heat the wires to very high temperatures so that high energy radiation doesn't need to be absorbed by a filter or coating. Furthermore, it allows to use various materials without evacuation of the wires' environment and/or the use of an inert gas. Besides, materials for this temperature range are often cheaper and easier to process compared to materials for high temperature heating.

These and other aspects of the invention will be apparent from and will be elucidated with reference to the embodiments described hereinafter.

### Brief description of the drawings

The present invention will now be described in more detail, by way of example, with reference to the accompanying drawings, wherein:
- Fig. 1: shows a schematic top view of an embodiment of the infrared emitter according to the invention,
- Fig. 2: shows a schematic cross section view of another embodiment of the infrared emitter according to the invention.

### Detailed description

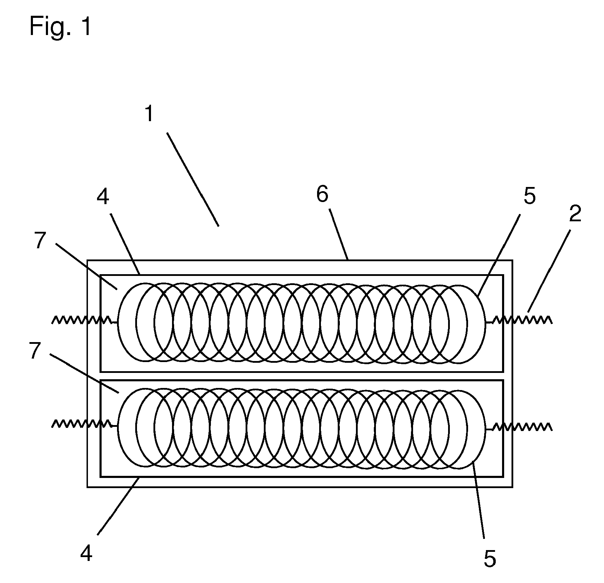

An infrared emitter 1 like the one shown in Fig. 1 can primarily be used for various purposes in which an object should be heated by irradiating it with infrared radiation, in particular medium infrared radiation with high radiation density.

One application is the heating of human living areas thereby replacing conventional heating by gas or electricity and allowing the selective heating of particular zones, e. g. Another possibility is to use the heating by infrared radiation to dry wet materials, for example wet paper in the printing industry. Medium infrared radiation in particular is an efficient part of the spectrum to heat and therefore remove water. Further application fields are the warming of food, the semiconductor industry and several others.

The infrared emitter 1 shown in Fig. 1 in a schematic top view is equipped with two resistance wires 5, each forming a helix 7. The two helices 7 are disposed in juxtaposition with each other at the side of their longitudinal axis.

In general, the ratio between the inner diameter of the helix 7 formed by each resistance wire 5 and the diameter of that resistance wire 5 is smaller than 8, whereas the length of one turn of the helix 7 is between 1.01 and 1.9 times the diameter of the resistance wire 5. In a typical example the diameter of the resistance wire 5 is 0.8 mm, the inner diameter of the helix 7 is 2 mm and the length of one turn of the helix 7 is 1.1 mm. This results in both a very high turn density of the helix 7 allowing a high infrared radiation density and a high stability of the structure of the helix 7.

In general the relative geometrical arrangement of the helices 7 should be as compact as possible in order to get a compact infrared emitter 1 with high radiation density.

The resistance wires 5 are heated by applying a voltage to them with the help of electrical connections 2. With the voltage applied, an electrical current is generated and the resistance of the wires 5 causes their heating, thereby producing infrared radiation. The embodiment of Fig. 1 comprises two parallel resistance wires 5 with separate electrical connections 2, but in general a multitude of parallel or serial connection schemes for two or more resistance wires 5 can be used. This also comprises to be able to have the electrical connections 2 only on one end of the infrared emitter 1. A typical voltage is about 230 V and a typical electrical current roughly 5 A. As a result the temperature of the resistance wires 5 rises to about 830 °C.

Common materials for the resistance wires 5 are metal alloys such as NiFe (80% Ni, 20% Fe), NiFeCr (60% Ni, 15% Fe, 25% Cr) or FeCrAl (75% Fe, 20% Cr, 5% Al) which are suitable for temperatures up to about 1000-1200 °C.

Each helix 7 is provided within a tube 4, preferably a glass tube 4. Furthermore, it is possible to have several helices 7 within the same tube 4. The tubes 4 don't need to surround the whole length of the helices 7. For some purposes it can be desirable to surround the helices 7 only partially.

A preferred material for the tube 4 is silica glass. In general each tube 4 should be basically transparent for medium infrared radiation to guarantee a maximized output of this radiation from the infrared emitter 1.

The tubes 4, each with a helix 7, are provided inside an outer tube 6 which is, like the tubes 4, basically transparent for medium infrared radiation.

In practice a channel of warm air can get formed around each helix 7 inside a tube 4, for example by the transport of thermal and small amounts of radiative energy between the helices 7 and the tubes 4. This warm surrounding of the helices 7 contributes to enhance the temperature of the helices 7 and therefore influences their radiation spectrum towards shorter wavelengths, particularly when compared to helices 7 without a surrounding tube 4 or to single helices 7 in a tube 4 separating them from other helices 7.

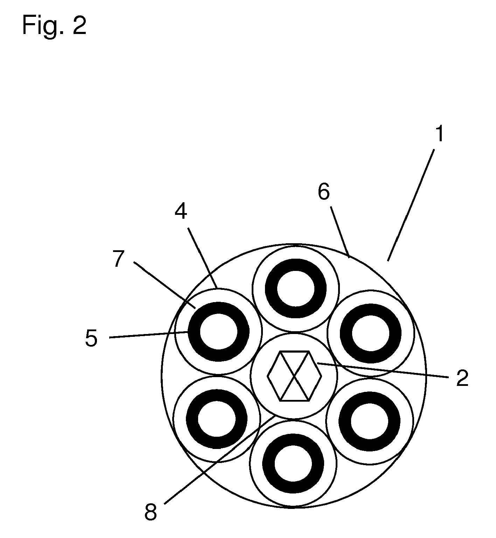

Fig. 2 shows a schematic cross section view of another embodiment of the infrared emitter 1 in which a plurality of tubes 4, 8 is surrounded by an outer tube 6.

Six tubes 4 in a circular arrangement are provided with a helix 7 inside and one tube 8 in the center, surrounded by the other tubes 4, is provided without a helix 7 inside. Instead, the tube 8 surrounds an electrical connection 2 which is lead through this tube 8 in order to allow electrical connections 2 only on one end of the infrared emitter 1. In general the tube 8 can also be left empty in order to serve as a separator for the tubes 4 with the helices 7.

## Claims

1. Infrared emitter (1) with at least two resistance wires (5) forming a helix (7), wherein the at least two helices (7) are disposed in juxtaposition with each other at the side of their longitudinal axis, **characterized in that** the ratio between the inner diameter of the helix (7) formed by each resistance wire (5) and the diameter of that resistance wire (5) is smaller than 8.

2. Infrared emitter (1) according to claim 1, **characterized in that** the resistance wires (5) are formed of a metal or a metal alloy.

3. Infrared emitter (1) according to one of the claims 1 or 2, **characterized in that** each helix (7) is provided within a tube (4), preferably a glass tube.

4. Infrared emitter (1) according to claim 3, **characterized in that** a plurality of tubes (4), each with a helix (7), is provided inside an outer tube (6).

5. Infrared emitter (1) according to one of the claims 1 or 2, **characterized in that** a plurality of tubes (4, 8) is surrounded by an outer tube (6), wherein at least two tubes (4) are provided with a helix (7) inside and at least one tube (8) is provided without a helix (7) inside.

6. Infrared emitter (1) according to one of the claims 3 to 5, **characterized in that** the tubes (4) and the outer tube (6) are basically transparent for medium infrared radiation.

7. Infrared emitter (1) according to one of the claims 1 to 6, **characterized in that** the length of one turn of the helix (7) is between 1.01 and 1.9 times the diameter of the resistance wire (5).

8. Infrared emitter (1) according to one of the claims 1 to 7, **characterized in that** the ratio between the inner diameter of the helix (7) formed by each resistance wire (5) and the diameter of that resistance wire (5) is between 1 and 8.

9. Infrared emitter (1) according to one of the claims 1 to 8, **characterized in that** the resistance wires (5) are heated to a temperature between 600 °C and 1200 °C.
